(19) **Europäisches Patentamt / European Patent Office / Office européen des brevets**

(11) **EP 3 360 055 B1**

(12) **FASCICULE DE BREVET EUROPEEN**

(45) Date de publication et mention de la délivrance du brevet:
**01.12.2021   Bulletin 2021/48**

(21) Numéro de dépôt: **16788159.8**

(22) Date de dépôt: **30.09.2016**

(51) Int Cl.:
**G06F 17/14** $^{(2006.01)}$   **G06K 9/20** $^{(2006.01)}$
**G06K 9/52** $^{(2006.01)}$

(86) Numéro de dépôt international:
**PCT/FR2016/052504**

(87) Numéro de publication internationale:
**WO 2017/060590 (13.04.2017 Gazette 2017/15)**

(54) **PROCEDE D'OPTIMISATION DE DECOMPOSITION D'UN SIGNAL ASYNCHRONE**

VERFAHREN ZUR OPTIMIERUNG DER ZERLEGUNG EINES ASYNCHRONEN SIGNALS

METHOD OF OPTIMIZING DECOMPOSITION OF AN ASYNCHRONOUS SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2015   FR 1559601**

(43) Date de publication de la demande:
**15.08.2018   Bulletin 2018/33**

(73) Titulaires:
• **Centre National de la Recherche Scientifique (CNRS)**
  **75016 Paris (FR)**
• **Sorbonne Université**
  **75006 Paris (FR)**
• **INSERM (Institut National de la Santé et de la Recherche Médicale)**
  **75013 Paris (FR)**

(72) Inventeurs:
• **BENOSMAN, Ryad**
  **93500 Pantin (FR)**
• **IENG, Siohoï**
  **93100 Montreuil (FR)**

(74) Mandataire: **Plasseraud IP**
  **66, rue de la Chaussée d'Antin**
  **75440 Paris Cedex 09 (FR)**

(56) Documents cités:
**EP-A1- 2 574 511     US-A- 5 272 535**

• **POSCH C ET AL: "A Microbolometer Asynchronous Dynamic Vision Sensor for LWIR", IEEE SENSORS JOURNAL, IEEE SERVICE CENTER, NEW YORK, NY, US, vol. 9, no. 6, 29 avril 2009 (2009-04-29), pages 654-664, XP011256553, ISSN: 1530-437X**
• **SOUMIK GHOSH ET AL: "ASPEN: An Asynchronous Signal Processor for Energy Efficient Sensor Nodes", ELECTRONICS, CIRCUITS, AND SYSTEMS (ICECS), 2010 17TH IEEE INTERNATIONAL CONFERENCE ON, IEEE, 12 décembre 2010 (2010-12-12), pages 268-272, XP031922956, DOI: 10.1109/ICECS.2010.5724505 ISBN: 978-1-4244-8155-2**

EP 3 360 055 B1

**Description**

La présente invention concerne le domaine du traitement de signal asynchrone, notamment pour le calcul d'une décomposition de ce signal sur une base de référence.

Diverses techniques de traitement de signal vidéo ont été historiquement développées. Elles reposent en général sur l'approche tramée traditionnelle.

Il existe des capteurs asynchrones (DVS, ATIS). Ces capteurs peuvent remplacer avantageusement des caméras traditionnelles.

Mais le traitement du signal est moins intuitif que dans le monde des caméras tramées. Si certains algorithmes ont été mis au point pour traiter certaines familles de problèmes (ex. flot optique, suivi de formes), d'autres problèmes restent peu ou pas explorés ou sont d'une résolution plus délicate.

Cela est notamment le cas pour le calcul de transformées (i.e. décomposition d'un signal sur une base d'une transformée, par exemple de Fourier ou en ondelettes).

Afin de calculer les décompositions d'images d'une vidéo sur une base donnée (notamment pour déterminer les fréquences spatiales dans une vidéo à un instant donné ou pour réaliser une compression), les procédés actuels (i.e. utilisant des données vidéo en provenance de caméras classiques) les calculent en utilisant les trames de la vidéo : par exemple, les transformées de Fourrier de la vidéo sont calculées en identifiant une trame dans la vidéo et en effectuant le calcul de décomposition sur cette trame.

Par exemple, la transformée de Fourrier d'une trame (signal 2D) est calculée de la manière suivante (écriture fonctionnelle) :

$$X(\nu,\mu) = \sum_{u=0}^{N-1} \sum_{v=0}^{M-1} x(u,v) e^{-i2\pi\left(\frac{u\nu}{N} + \frac{v\mu}{M}\right)}$$

avec N et M les dimensions de la trame, $x(u,v)$ une valeur d'un pixel de la trame pour les coordonnées $(u,v)$, $\nu,\mu$ les différentes fréquences possibles. Si une nouvelle trame est reçue, la décomposition est intégralement recalculée.

Ce mode de calcul s'explique principalement par la technologie d'acquisition habituelle des vidéos : les données vidéo sont le fruit d'une acquisition produisant un grand nombre d'images statiques (ou *frame* en anglais, trame en français). Cette technologie d'acquisition des vidéos a conditionné historiquement la manière dont sont traitées les vidéos.

À l'inverse, des capteurs de vision asynchrones basés sur des événements délivrent des données numériques compressées sous forme d'événements.

Une présentation de tels capteurs peut être consultée dans « Activity-Driven, Event-Based Vision Sensors», T. Delbrück, et al., Proceedings of 2010 IEEE International Symposium on Circuits and Systems (ISCAS), pp. 2426-2429. Les capteurs de vision basés sur des événements ont pour avantage d'enlever par construction la redondance spatiale et temporelle, de réduire les temps de latence et d'augmenter la gamme dynamique par rapport aux caméras classiques fonctionnant sur le principe des « trames ».

La sortie d'un tel capteur de vision peut consister, pour chaque adresse de pixel, en une séquence d'événements asynchrones représentatifs des changements de réflectance/luminance de la scène au moment où ils se produisent.

Chaque pixel du capteur est indépendant et détecte des changements d'intensité supérieurs à un seuil depuis l'émission du dernier événement (par exemple un contraste de 15% sur le logarithme de l'intensité). Lorsque le changement d'intensité dépasse le seuil fixé, un événement ON ou OFF est généré par le pixel selon que l'intensité augmente ou diminue (capteurs DVS).

Certains capteurs asynchrones associent les événements détectés à des mesures d'intensité lumineuse (capteurs ATIS).

Le capteur n'étant pas échantillonné sur une horloge comme une caméra classique, ce capteur peut rendre compte du séquencement des événements avec une très grande précision temporelle (par exemple, de l'ordre de 1 μs). Si on utilise un tel capteur pour reconstruire une séquence d'images, on peut atteindre une cadence d'images de plusieurs kilohertz, contre quelques dizaines de hertz pour des caméras classiques.

La grande précision temporelle de ces caméras peut permettre d'exploiter au mieux l'information temporelle d'une vidéo.

Afin de calculer la décomposition d'un signal, il est naturel d'utiliser les algorithmes optimisés connus (comme les FFT (pour « *Fast Fourier Transform* » en anglais) pour les transformées de Fourier). Dans le cadre de caméras asynchrones, l'homme du métier serait ainsi incité à utiliser les algorithmes proposés antérieurement en prétraitant la vidéo en amont (i.e. en créant des « trames » à partir du flux asynchrone et de calculer les transformations à partir de ces trames reconstituées).

Néanmoins, ces calculs de transformées (i.e. la décomposition d'un signal donné sur les bases des transformées) sont lourds et il peut être difficile de les effectuer dès qu'un nouvel événement survient dans le flux asynchrone (plusieurs milliers d'événements peuvent survenir chaque seconde).

Le document US 5 272 535 divulgue un procédé de traitement d'une image. POSCH C ET AL divulgue dans "A Microbolometer Asynchronous Dynamic Vision Sensor for LWIR" un capteur d'images asynchrone.

Dès lors, il existe un besoin pour effectuer le calcul des transformées de manière optimisée pour les caméras asynchrones afin d'éviter des calculs trop lourds et/ou une consommation mémoire trop importante.

La présente invention vient ainsi améliorer la situation.

La présente invention vise alors un procédé, mis en œuvre par ordinateur, d'optimisation de décomposition d'un signal asynchrone produit par un capteur de lumière sur une base de décomposition propre à une transformation, le capteur ayant une matrice de pixels disposée en regard d'une scène, le procédé comprenant :

/a/ obtenir une décomposition dudit signal asynchrone pour un premier temps donné sur la base de décomposition ;

/b/ recevoir du capteur de lumière le signal asynchrone comprenant au moins un événement issu d'un pixel de la matrice, l'au moins un événement ayant été produit par le capteur entre le premier temps et un deuxième temps ultérieur ;

/c/ déterminer une première valeur dudit pixel pour le premier temps;

/d/ déterminer une deuxième valeur dudit pixel pour le deuxième temps en fonction du au moins un événement ;

/e/ déterminer une mise à jour de la décomposition obtenue en fonction de ladite décomposition obtenue, d'une différence entre la première valeur et de la deuxième valeur et d'un terme fonction de coordonnées dudit pixel et de la base de décomposition de ladite transformation.

Par exemple, la base de décomposition de la transformée de Fourrier est un ensemble d'exponentiel complexe (i.e. $e^{-i2\pi\frac{k.r}{N}}$ avec k prenant plusieurs valeurs).

La décomposition peut être obtenue lors de l'étape /a/ à l'aide d'une base de données. Cette décomposition peut être précalculée à l'aide d'algorithme(s) classique(s).

Le capteur asynchrone peut être un capteur de type ATIS ou de type DVS ou de tout autre type asynchrone.

La détermination de l'étape /c/ peut être effectuée en réalisant une requête dans une base de données ou en interrogeant une mémoire.

Le plus souvent, les décompositions effectuées sur les signaux vidéo concernent la composante de luminosité ou de luminance. Ainsi, la première et deuxième valeurs sont le plus souvent des valeurs de luminosité / luminance.

L'événement portant le plus souvent une information de variation de luminosité par rapport à un état précédent (i.e. par rapport à la valeur de luminosité du pixel avant la survenance de l'événement), il est possible de déterminer la nouvelle luminosité du pixel en connaissant la valeur du pixel juste avant la survenance de l'événement.

Le « terme fonction de coordonnées dudit pixel et de la base de décomposition de ladite transformation » peut être exprimé sous la forme d'une matrice ou sous la forme d'une somme de fonctions.

Ainsi, le calcul de la nouvelle décomposition (i.e. prenant en compte la modification liée à la survenance de l'événement) peut être très rapide car elle n'est pas recalculée complètement. Seul un terme correcteur est calculé.

Dans un mode de réalisation possible, ladite transformation peut être dans le groupe suivant : une transformation de Fourrier, une transformation en ondelettes, ou toute transformation linéaire.

De manière alternative, ladite transformation peut être une transformation non linéaire, la base de décomposition propre à cette transformation étant un développement d'ordre un de ladite transformation.

Par ailleurs, les étapes /a/ à /e/ peuvent être réitérées:

- en utilisant la mise à jour de l'étape /e/ comme décomposition de l'étape /a/,

- en utilisant le deuxième temps comme premier temps, un troisième temps ultérieur au deuxième temps étant utilisé comme deuxième temps.

Dans une mode de réalisation avantageux, un unique événement peut être reçu à l'étape /b/.

Ainsi, dès la réception du moindre événement, la décomposition est immédiatement mise à jour sans attendre.

Dans un mode de réalisation particulier, la mise à jour peut être calculée comme une somme matricielle :

- de ladite décomposition obtenue, et exprimée sous forme matricielle ;

- d'une différence entre la première valeur et de la deuxième valeur et multipliée par une première matrice dont les termes ne sont fonction que des coordonnées dudit pixel et de la base de décomposition de ladite transformation.

En outre, le procédé peut comprendre une étape préalable à l'étape /e/ :

/f/ pour chaque pixel dudit capteur, précalculer et enregistrer dans une mémoire la première matrice.

La présente invention vise également un dispositif de calcul optimisé de décomposition d'un signal asynchrone produit par un capteur de lumière sur une base de décomposition propre à une transformation, le capteur ayant une matrice de pixels disposée en regard d'une scène, le dispositif comprenant :

/a/ une interface adaptée pour obtenir une décomposition dudit signal asynchrone pour un premier temps donné par ladite transformation ;

/b/ une interface adaptée pour recevoir du capteur de lumière, le signal asynchrone comprenant au moins un événement issu d'un pixel de la matrice, l'au moins un événement ayant été produit par le capteur entre le premier temps et un deuxième temps ultérieur ;

/c/ un circuit adapté pour déterminer une première valeur dudit pixel pour le premier temps donné ;

/d/ un circuit adapté pour déterminer une deuxième valeur dudit pixel pour le deuxième temps en fonction du au moins un événement ;

/e/ un circuit adapté pour déterminer une mise à jour de la décomposition obtenue en fonction de ladite décomposition obtenue, d'une différence entre la première valeur et de la deuxième valeur et d'un terme fonction de coordonnées dudit pixel et de la base de décomposition de ladite transformation.

Un programme informatique, mettant en œuvre tout ou partie du procédé décrit ci-avant, installé sur un équipement préexistant, est en lui-même avantageux, dès lors qu'il permet la mise en œuvre d'un mode de réalisation de l'invention.

Ainsi, la présente invention vise également un programme informatique comportant des instructions pour la mise en œuvre du procédé précédemment décrit, lorsque ce programme est exécuté par un processeur.

Ce programme peut utiliser n'importe quel langage de programmation (par exemple, un langage-objet ou autre), et être sous la forme d'un code source interprétable, d'un code partiellement compilé ou d'un code totalement compilé.

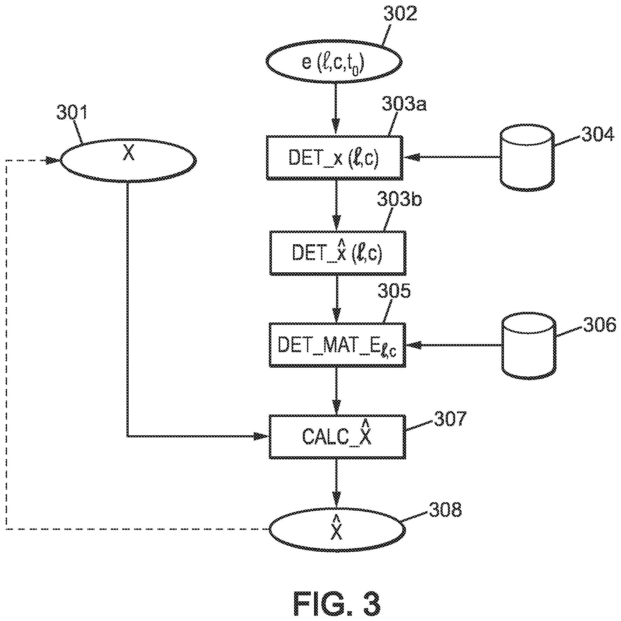

La figure 3, décrite en détail ci-après, peut former l'organigramme de l'algorithme général d'un tel programme informatique.

D'autres caractéristiques et avantages de l'invention apparaîtront encore à la lecture de la description qui va suivre. Celle-ci est purement illustrative et doit être lue en regard des dessins annexés sur lesquels :

- la figure 1 est un schéma synoptique d'un capteur asynchrone de lumière de type ATIS ;

- la figure 2 est un diagramme montrant des événements générés par un capteur asynchrone placé en regard d'une scène comportant une étoile tournante ;

- la figure 3 est un ordinogramme présentant un processus d'optimisation de calcul de décomposition d'un signal sur une base de la transformée selon un mode de réalisation de l'invention.

- la figure 4 représente un exemple de dispositif permettant de mettre en œuvre un mode de réalisation de l'invention.

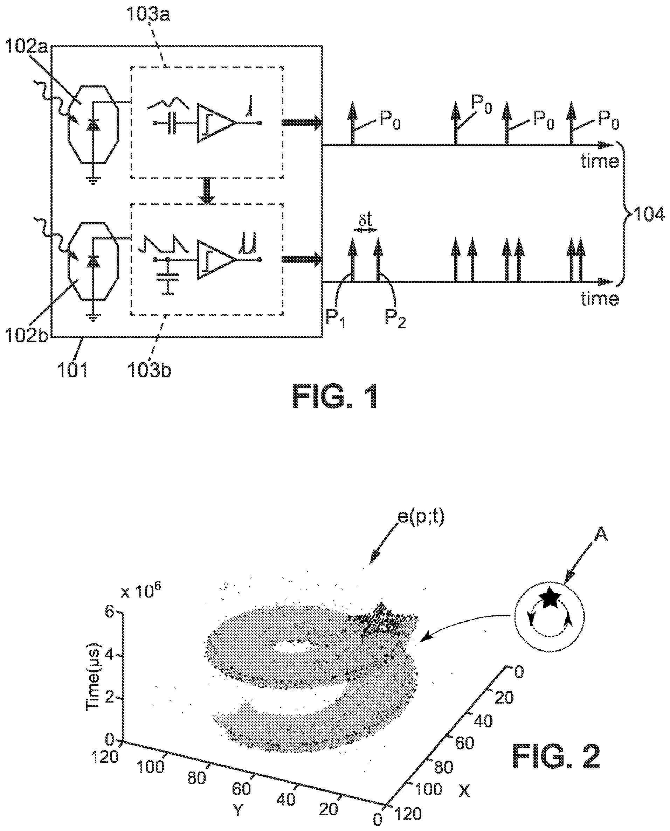

La figure 1 illustre le principe de l'ATIS.

Un pixel 101 de la matrice constituant le capteur comporte deux éléments photosensibles 102a, 102b, tels que des photodiodes, respectivement associés à des circuits électroniques de détection 103a, 103b.

Le capteur 102a et son circuit 103a produisent une impulsion $P_0$ lorsque l'intensité lumineuse reçue par la photodiode 102a varie d'une quantité prédéfinie.

L'impulsion $P_0$ marquant ce changement d'intensité déclenche le circuit électronique 103b associé à l'autre photodiode 102b. Ce circuit 103b génère alors une première impulsion $P_1$ puis une deuxième impulsion $P_2$ dès qu'une quantité de lumière donnée (nombre de photons) est reçue par la photodiode 102b.

L'écart temporel $\delta t$ entre les impulsions $P_1$ et $P_2$ est inversement proportionnel à l'intensité lumineuse reçue par le pixel 101 juste après l'apparition de l'impulsion $P_0$.

L'information asynchrone issue de l'ATIS comprend deux trains impulsions combinées pour chaque pixel (104) :

le premier train des impulsions $P_0$ indique les instants où l'intensité lumineuse a changé au-delà du seuil de détection, tandis que le second train se compose des impulsions $P_1$ et $P_2$ dont l'écart temporel $\delta t$ indique les intensités lumineuses, ou niveaux de gris, correspondants.

Un événement $e(\boldsymbol{p},t)$ issu d'un pixel 101 de position $\boldsymbol{p}$ dans la matrice de l'ATIS comporte alors deux types d'information: une information temporelle donnée par la position de l'impulsion $P_0$, donnant l'instant t de l'événement, et une information de niveau de gris donnée par l'écart temporel $\delta t$ entre les impulsions $P_1$ et $P_2$.

On peut alors placer les événements provenant des pixels dans une représentation espace-temps à trois dimensions telle que celle présentée sur la figure 2. Sur cette figure, chaque point $\boldsymbol{p}$ repère un événement $e(\boldsymbol{p},t)$ engendré de manière asynchrone à un instant t au niveau d'un pixel $\boldsymbol{p}$ du capteur, de position $\begin{pmatrix} x \\ y \end{pmatrix}$, par le mouvement d'une étoile tournant à vitesse angulaire constante comme schématisé dans l'encadré A. La majeure partie de ces points se répartissent à proximité d'une surface de forme générale hélicoïdale. En outre, la figure montre un certain nombre d'événements à distance de la surface hélicoïdale qui sont mesurés sans correspondre au mouvement effectif de l'étoile. Ces événements représentent du bruit d'acquisition.

Les événements $e(\boldsymbol{p},t)$ peuvent alors être définis par l'ensemble des informations suivantes :

$$e(\boldsymbol{p},t) = \begin{cases} \boldsymbol{p} \in C \subset \mathbb{R}^2 \\ pol \\ I(\boldsymbol{p},t) \end{cases}$$

avec C le domaine spatial du capteur, *pol* la polarité représentant la direction du changement de luminance (ex. 1 pour une augmentation ou -1 pour une diminution) et $I(\boldsymbol{p},t)$ le signal d'intensité lumineuse du point $\boldsymbol{p}$.

Le signal asynchrone peut être ainsi l'ensemble des trains d'impulsions combinées 104 tel que décrit en Figure 1. Si $t_u$ représente le temps de survenance de l'événement, et l'écart entre $t_{e+,u}$ et $t_{e-,u}$ représente une valeur inversement proportionnelle à la variation d'intensité, il est possible de coder l'intensité à l'aide de trois Dirac $\delta$ de telle sorte que $I(\boldsymbol{p},t) = \delta(t-t_u) + \delta(t-t_{e+,u}) + \delta(t-t_{e-,u})$. Le signal d'intensité du pixel situé à la coordonnée $\boldsymbol{p}$ permet alors de coder temporellement les informations de luminance.

Il est possible de noter le i$^{ème}$ événement d'un capteur comme $ev(i)$, $ev(i)$ étant alors défini par l'ensemble des informations suivantes :

$$ev(i) = \begin{cases} \boldsymbol{p_i} \in C \subset \mathbb{R}^2 \\ pol_i \\ t_i \\ I_i(\boldsymbol{p_i},t_i) \end{cases}$$

avec $C$ le domaine spatial du capteur, $\boldsymbol{p_i}$ le point du capteur concerné par le i$^{ème}$ événement, $pol_i$ la polarité représentant un type d'événements (par exemple, la direction du changement de luminance pour le i$^{ème}$ événement, ex. 1 pour une augmentation ou -1 pour une diminution), $t_i$ le temps de survenance du i$^{ème}$ événement et $I_i(\boldsymbol{p},t)$ le signal d'intensité lumineuse du point $\boldsymbol{p_i}$ (si cette valeur est disponible).

La Figure 3 est un ordinogramme présentant un processus d'optimisation de calcul de décomposition d'un signal x sur une base de la transformée selon un mode de réalisation de l'invention.

Dans ce mode de réalisation, il est supposé que le calcul de décomposition de ce signal sur la base de la transformée a déjà été effectuée pour un temps donné $t_0$ de la vidéo : le calcul de cette décomposition a été soit effectué sur la base d'une trame (éventuellement reconstruite) soit à l'aide du procédé de mise à jour de la transformée et décrit ci-dessous.

Cette décomposition est notée X (élément 301).

La transformée considérée peut être toute transformation linéaire effectuée, par exemple, sur une image/trame de la vidéo (ex. une transformée de Fourier, une transformée en ondelette, etc.) ou même toute transformée non-linéaire.

Lors de la réception d'un événement $e(\boldsymbol{p},t_0) = e(l,c,t_0)$ en provenance du capteur asynchrone et pour le pixel $\boldsymbol{p}$ de coordonnées (l,c), il est possible de déterminer (étape 303a) la valeur précédente de ce pixel (notée x(l,c), i.e. juste avant la survenance de l'événement, avant le temps $t_0$) : cette valeur précédente peut être déterminée à l'aide d'une base de données *ad hoc* (élément 304) ou par tout autre moyen.

De même, il est possible d'obtenir / de déterminer la valeur $\hat{x}$(l,c) dudit pixel $\boldsymbol{p}$ (élément 302) juste après la survenance de l'événement (au temps $t_0$) connaissant la valeur précédente du pixel (i.e. x(l,c)) ainsi que l'événement.

Bien entendu, les valeurs $\hat{x}(l,c)$ et x(l,c) peuvent être déterminées par le processus ou simplement reçues comme entrées de celui-ci.

Une fois la valeur courante du pixel (i.e $\hat{x}(l,c)$) ainsi que la valeur précédente du pixel déterminées/reçues (i.e. x(l,c)), il est possible de calculer $\hat{X}$ défini comme étant :

$$\hat{X} = X + [\hat{x}(l,c) - x(l,c)] E_{l,c}$$

avec $E_{l,c}$ une matrice complexe propre au pixel de coordonnées (l,c) et fonction de la base de décomposition pour la transformation correspondante : la matrice $E_{l,c}$ n'est fonction que des coordonnées du pixel (l,c) et de la transformation considérée.

Cette formule peut se démontrer en soustrayant deux décompositions effectuées sur deux signaux, les signaux n'étant différents que pour un pixel de coordonnées (l,c). Après simplification et réarrangements des membres, la matrice $E_{l,c}$ peut être aisément déterminée et cela pour n'importe quelle transformation linéaire.

Il est ainsi possible de déterminer (étape 305) la matrice $E_{l,c}$ à utiliser à partir d'une base de données de matrices précalculées 306 (ou par tout autre moyen comme en effectuant un re-calcul à la demande de la matrice $E_{l,c}$).

Le calcul de $\hat{X}$ (étape 307) permet d'obtenir de manière efficace (i.e. en limitant notamment le nombre de calculs) la décomposition 308 à un instant $t_0$ donné (i.e. correspondant au temps de survenance de l'événement) de la vidéo.

La décomposition 308 peut être réutilisée en tant que décomposition 301 lors de la survenance de l'événement suivant.

Dès lors, à chaque événement, le calcul habituel pour calculer la décomposition est évité: seul un coefficient modificateur (i.e. $[\hat{x}(l,c) - x(l,c)] E_{l,c}$) de la décomposition antérieure est calculé et permet de mettre à jour cette décomposition tout en limitant la complexité des calculs.

Par exemple, pour une transformation de Fourier, il est classique d'écrire la matrice complexe $E_{l,c}$ sous la forme suivante :

$$E_{l,c} = \begin{bmatrix} e^{-i2\pi\left(\frac{l\times 0}{N} + \frac{c\times 0}{M}\right)} & \cdots & e^{-i2\pi\left(\frac{l\times 0}{N} + \frac{c\times M}{M}\right)} \\ \vdots & \ddots & \vdots \\ e^{-i2\pi\left(\frac{l\times N}{N} + \frac{c\times 0}{M}\right)} & \cdots & e^{-i2\pi\left(\frac{l\times N}{N} + \frac{c\times M}{M}\right)} \end{bmatrix}$$

La matrice complexe $E_{l,c}$ n'est donc fonction que des coordonnées des pixels et de la base des fonctions de décomposition.

Pour une transformation en ondelettes, une telle écriture est également possible (comme pour toutes les transformations, les transformations linéaires, les décompositions ou méthodes similaires, etc.). En effet, concernant la décomposition en ondelettes d'un signal 2D x, il est habituel d'écrire cette décomposition sous la forme $X = \left[\prod_{i=1}^{k} h_i\right] x \left[\prod_{i=1}^{k} h_i\right]^T = H x H^T$ (avec $h_i$ une matrice appliquée à la $i^{ème}$ étape de la décomposition en ondelette). Ainsi, du fait de cette écriture, nous avons $\hat{X} = X + H[\hat{x}(l,c) - x(l,c)] H^C$ avec $H^C$ la $c^{ème}$ ligne de $H^T$. Dès lors, une simple réécriture permet d'identifier la matrice $E_{l,c}$ dans le cadre d'une décomposition en ondelette $\hat{X} = X + [\hat{x}(l,c) - x(l,c)] E_{l,c}$ avec :

$$E_{l,c} = \begin{bmatrix} \beta_{l,0} H^c \\ \beta_{l,1} H^c \\ \cdots \\ \beta_{l,K} H^c \end{bmatrix}$$

$$et \begin{bmatrix} \beta_{l,0} \\ \beta_{l,i} \\ ... \\ \beta_{l,K} \end{bmatrix} \text{ étant la } l^{\text{ième}} \text{ colonne de H.}$$

Par ailleurs, dans le cadre d'une décomposition ou d'une transformation quelconque, il est toujours possible d'approcher ladite transformation à l'aide d'une écriture de la forme $\hat{X} = X + [\hat{x}(l,c) - x(l,c)] E_{l,c}$. En effet, il est toujours possible d'approcher une transformation non linéaire par une transformation linéaire au premier ordre. Cette approximation est d'autant plus juste que la variation liée à l'événement reçu ne touche qu'un seul pixel de la vidéo et cette infime modification n'impacte que très légèrement les ordres supérieurs de la transformation.

Dans le cadre de transformation classique (ex. linéaire et/ou transformation de Fourrier), il est possible de constater que le nombre d'opérations nécessaires à la mise à jour de la transformée (comme proposé précédemment) est $O(n^2)$ au lieu de $O(n^4)$ pour un calcul complet de la transformation à l'aide des outils classiques (en considérant que la transformation convertit un espace à n dimensions dans un autre espace à n dimensions).

Par ailleurs, et dans le cadre de certaines transformations (ex. les transformées en ondelettes de Haar), il est possible de montrer que le nombre de calculs est encore plus faible (ex. $O(\log(n))$ car certains éléments des matrices utilisées sont nuls (en considérant toujours que la transformation convertit un espace à n dimensions dans un autre espace à n dimensions).

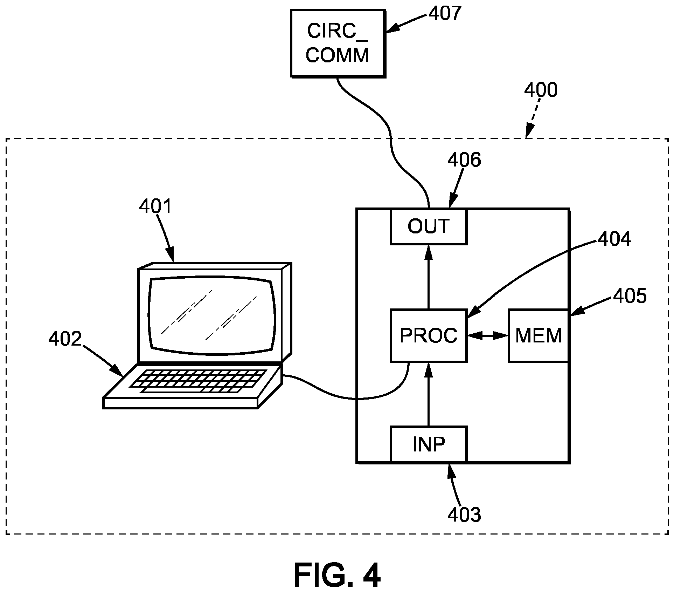

La figure 4 représente un exemple de dispositif permettant la mise en œuvre d'une mode de réalisation de l'invention.

Dans ce mode de réalisation, le dispositif comporte un ordinateur 400, comprenant une mémoire 405 pour stocker des instructions permettant la mise en œuvre du procédé, les données de mesures reçues, et des données temporaires pour réaliser les différentes étapes du procédé tel que décrit précédemment.

L'ordinateur comporte en outre un circuit 404. Ce circuit peut être, par exemple :

- un processeur apte à interpréter des instructions sous la forme de programme informatique, ou

- une carte électronique dont les étapes du procédé de l'invention sont décrites dans le silicium, ou encore

- une puce électronique programmable comme une puce FPGA (pour « Field-Programmable Gate Array » en anglais).

Cet ordinateur comporte une interface d'entrée 403 pour la réception des événements, et une interface de sortie 406 pour la fourniture des résultats du calcul des transformées, par exemple à un dispositif externe 407. Enfin, l'ordinateur peut comporter, pour permettre une interaction aisée avec un utilisateur, un écran 401 et un clavier 402. Bien entendu, le clavier est facultatif, notamment dans le cadre d'un ordinateur ayant la forme d'une tablette tactile, par exemple.

Par ailleurs, le schéma fonctionnel présenté sur la figure 3 est un exemple typique d'un programme dont certaines instructions peuvent être réalisées auprès du dispositif décrit. À ce titre, la figure 3 peut correspondre à l'organigramme de l'algorithme général d'un programme informatique au sens de l'invention.

Bien entendu, la présente invention ne se limite pas aux formes de réalisation décrites ci-avant à titre d'exemple ; elle s'étend à d'autres variantes.

D'autres réalisations sont possibles.

Par exemple, la description mentionne le calcul possible des transformations (i.e. la décomposition) à l'aide d'une base de décomposition sous forme matricielle $\{E_{l,c}\}_{l,c}$. Bien entendu, cette écriture matricielle est simplement une des écritures possibles de la décomposition sur la base de la transformation. Une écriture fonctionnelle est également possible et directe pour l'homme du métier.

## Revendications

1. Procédé, mis en œuvre par ordinateur, d'optimisation de décomposition d'un signal asynchrone (104) produit par un capteur de lumière sur une base de décomposition propre à une transformation, le capteur ayant une matrice de pixels (101) disposée en regard d'une scène, le procédé comprenant :

   /a/ obtenir une décomposition (301) dudit signal asynchrone pour un premier temps donné sur la base de décomposition ;

/b/ recevoir du capteur de lumière le signal asynchrone comprenant au moins un événement (302) issu d'un pixel de la matrice, le au moins un événement ayant été produit par le capteur entre le premier temps et un deuxième temps ultérieur ;

/c/ déterminer (303a) une première valeur dudit pixel (x(l,c)) pour le premier temps;

/d/ déterminer (303b) une deuxième valeur dudit pixel ($\hat{x}$(l,c)) pour le deuxième temps en fonction du au moins un événement (302) ;

/e/ déterminer une mise à jour de la décomposition (308) obtenue en fonction de ladite décomposition obtenue, d'une différence entre la première valeur et de la deuxième valeur et d'un terme ($E_{l,c}$) fonction de coordonnées dudit pixel (l,c) et de la base de décomposition de ladite transformation.

2. Procédé selon la revendication 1, dans lequel ladite transformation est dans le groupe suivant : une transformation de Fourrier, une transformation en ondelettes, une transformation linéaire.

3. Procédé selon la revendication 1, dans lequel ladite transformation est une transformation non linéaire, la base de décomposition propre à cette transformation étant un développement d'ordre un de ladite transformation.

4. Procédé selon l'une des revendications précédentes, dans lequel les étapes /a/ à /e/ sont réitérées:

- en utilisant la mise à jour de l'étape /e/ comme décomposition de l'étape /a/,
- en utilisant le deuxième temps comme premier temps, un troisième temps ultérieur au deuxième temps étant utilisé comme deuxième temps.

5. Procédé selon l'une des revendications précédentes, dans lequel un unique événement (302) est reçu à l'étape /b/.

6. Procédé selon l'une des revendications précédentes, dans lequel la mise à jour est calculée comme une somme matricielle :

- de ladite décomposition obtenue, et exprimée sous forme matricielle ;
- d'une différence entre la première valeur et de la deuxième valeur et multipliée par une première matrice dont les termes ne sont fonction que des coordonnées dudit pixel et de la base de décomposition de ladite transformation.

7. Procédé selon la revendication 6, dans lequel, le procédé comprend en outre une étape préalable à l'étape /e/ : /f/ pour chaque pixel dudit capteur, précalculer et enregistrer dans une mémoire la première matrice.

8. Produit programme informatique comportant des instructions pour la mise en œuvre du procédé selon l'une des revendications 1 à 7, lorsque ce programme est exécuté par un processeur.

9. Dispositif de calcul optimisé de décomposition d'un signal asynchrone produit par un capteur de lumière sur une base de décomposition propre à une transformation, le capteur ayant une matrice de pixels disposée en regard d'une scène, le dispositif comprenant :

/a/ une interface (403) adaptée pour obtenir une décomposition (301) dudit signal asynchrone pour un premier temps donné par ladite transformation ;

/b/ une interface (403) adaptée pour recevoir du capteur de lumière le signal asynchrone comprenant au moins un événement (302) issu d'un pixel de la matrice, le au moins un événement ayant été produit par le capteur entre le premier temps et un deuxième temps ultérieur ;

/c/ un circuit (404) adapté pour déterminer (303) une première valeur dudit pixel (x(l, c)) pour le premier temps donné ;

/d/ un circuit (404) adapté pour déterminer une deuxième valeur dudit pixel ($\hat{x}$(l,c)) pour le deuxième temps en fonction du au moins un événement ;

/e/ un circuit (404) adapté pour déterminer une mise à jour de la décomposition (308) obtenue en fonction de ladite décomposition obtenue, d'une différence entre la première valeur et de la deuxième valeur et d'un terme fonction de coordonnées dudit pixel (l,c) et de la base de décomposition de ladite transformation.

**Patentansprüche**

1. Verfahren, das von einem Computer durchgeführt wird, zur Optimierung einer Zerlegung eines von einem Lichtsensor erzeugten asynchronen Signals (104) auf einer Zerlegungsbasis, die einer Transformation eigen ist, wobei der Sensor eine gegenüber einer Szene angeordnete Pixelmatrix (101) aufweist, wobei das Verfahren aufweist:

   /a/ Erhalten einer Zerlegung (301) des asynchronen Signals für einen ersten gegebenen Zeitpunkt auf der Zerlegungsbasis;
   /b/ Empfangen des asynchronen Signals, das mindestens ein aus einem Pixel der Matrix ausgegebenes Ereignis (302) aufweist, aus dem Lichtsensor, wobei das mindestens eine Ereignis zwischen dem ersten Zeitpunkt und einem späteren zweiten Zeitpunkt von dem Sensor erzeugt worden ist;
   /c/ Bestimmen (303a) eines ersten Werts des Pixels ($x(l,c)$) für den ersten Zeitpunkt;
   /d/ Bestimmen (303b) eines zweiten Werts des Pixels ($\hat{x}(l,c)$) für den zweiten Zeitpunkt als Funktion des mindestens einen Ereignisses (302);
   /e/ Bestimmen einer Aktualisierung der erhaltenen Zerlegung (308) als Funktion der erhaltenen Zerlegung, einer Differenz zwischen dem ersten Wert und zweiten Wert und eines Terms ($E_{l,c}$), der Funktion von Koordinaten des Pixels ($l,c$) und der Zerlegungsbasis der Transformation ist.

2. Verfahren nach Anspruch 1, in welchem die Transformation in der folgenden Gruppe ist: eine Fourier-Transformation, eine Wavelet-Transformation und eine lineare Transformation.

3. Verfahren nach Anspruch 1, in welchem die Transformation eine nichtlineare Transformation ist, wobei die dieser Transformation eigene Zerlegungsbasis eine Entwicklung erster Ordnung der Transformation ist.

4. Verfahren nach einem der vorstehenden Ansprüche, in welchem die Schritte /a/ bis /e/ wiederholt werden:

   - unter Verwendung der Aktualisierung des Schritts /e/ als Zerlegung des Schritts /a/,
   - unter Verwendung des zweiten Zeitpunkts als ersten Zeitpunkt, wobei ein dritter Zeitpunkt, der später als der zweite Zeitpunkt ist, als zweiter Zeitpunkt verwendet wird.

5. Verfahren nach einem der vorstehenden Ansprüche, in welchem in Schritt /b/ ein einmaliges Ereignis (302) empfangen wird.

6. Verfahren nach einem der vorstehenden Ansprüche, in welchem die Aktualisierung berechnet wird als eine Matrixsumme

   - der erhaltenen Zerlegung, und in Matrixform ausgedrückt wird;
   - einer Differenz zwischen dem ersten Wert und zweiten Wert, und mit einer ersten Matrix multipliziert wird, deren Terme nur Funktion von Koordinaten des Pixels und der Zerlegungsbasis der Transformation sind.

7. Verfahren nach Anspruch 6, in welchem das Verfahren vor dem Schritt /e/ ferner einen Schritt aufweist:
   /f/ für jeden Pixel des Sensors, Vorberechnen und Speichern der ersten Matrix in einem Speicher.

8. Computerprogrammprodukt, das Befehle zum Durchführen des Verfahrens nach einem der Ansprüche 1 bis 7 aufweist, wenn dieses Programm von einem Prozessor ausgeführt wird.

9. Vorrichtung zur optimierten Berechnung einer Zerlegung eines von einem Lichtsensor erzeugten asynchronen Signals auf einer Zerlegungsbasis, die einer Transformation eigen ist, wobei der Sensor eine gegenüber einer Szene angeordnete Pixelmatrix aufweist, wobei die Vorrichtung aufweist:

   /a/ eine geeignete Schnittstelle (403) zum Erhalten einer Zerlegung (301) des asynchronen Signals für einen ersten gegebenen Zeitpunkt mittels der Transformation;
   /b/ eine geeignete Schnittstelle (403) zum Empfangen des asynchronen Signals, das mindestens ein aus einem Pixel der Matrix ausgegebenes Ereignis (302) aufweist, aus dem Lichtsensor, wobei das mindestens eine Ereignis zwischen dem ersten Zeitpunkt und einem späteren zweiten Zeitpunkt von dem Sensor erzeugt worden ist;
   /c/ eine geeignete Schaltung (404) zum Bestimmen (303) eines ersten Werts des Pixels ($\hat{x}(l,c)$) für den ersten gegebenen Zeitpunkt;

/d/ eine geeignete Schaltung (404) zum Bestimmen eines zweiten Werts des Pixels ($\hat{x}$(l,c)) für den zweiten Zeitpunkt als Funktion des mindestens einen Ereignisses;

/e/ eine geeignete Schaltung (404) zum Bestimmen einer Aktualisierung der erhaltenen Zerlegung (308) als Funktion der erhaltenen Zerlegung, einer Differenz zwischen dem ersten Wert und zweiten Wert und eines Terms, der Funktion von Koordinaten des Pixels (l,c) und der Zerlegungsbasis der Transformation ist.

**Claims**

1. Method, implemented by computer, for optimizing a decomposition of an asynchronous signal (104) produced by a light sensor on a decomposition basis specific to a transformation, the sensor having a pixel matrix (101) disposed opposite a scene, the method comprising:

/a/ obtaining a decomposition (301) of said asynchronous signal for a given first instant on the decomposition basis;

/b/ receiving from the light sensor the asynchronous signal comprising at least one event (302) coming from a pixel of the matrix, the at least one event having been produced by the sensor between the first instant and a second later instant;

/c/ determining (303a) a first value of said pixel ($\hat{x}$(l,c)) for the first instant;

/d/ determining (303b) a second value of said pixel ($\hat{x}$(l,c)) for the second instant as a function of the at least one event (302);

/e/ determining an update of the decomposition (308) obtained as a function of said obtained decomposition, of a difference between the first value and of the second value and of a term ($E_{l,c}$) dependent on coordinates of said pixel (l,c) and the decomposition basis of said transformation.

2. Method according to claim 1, wherein said transformation is in the following group: a Fourrier transform, a wavelet transform, a linear transform.

3. Method according to claim 1, wherein said transformation is a non-linear transform, the decomposition basis specific to this transformation being a first order development of said transformation.

4. Method according to one of the preceding claims, wherein the steps /a/ to /e/ are reiterated:

- by using the update of the step /e/ as decomposition of the step /a/,
- by using the second instant as a first instant, a third instant later than the second instant being used as second instant.

5. Method according to one of the preceding claims, wherein a single event (302) is received in step /b/.

6. Method according to one of the preceding claims, wherein the update is calculated as a matrix sum:

- of said obtained decomposition, and expressed in matrix form;
- of a difference between the first value and of the second value and multiplied by a first matrix the terms of which depend only on coordinates of said pixel and the decomposition basis of said transformation.

7. Method according to claim 6, wherein, the method further comprises a step prior to the step /e/:
/f/ for each pixel of said sensor, pre-calculating and recording in a memory the first matrix.

8. Computer program product including instructions for the implementation of the method according to one of claims 1 to 7, when this program is executed by a processor.

9. Device for optimised calculation of decomposition of an asynchronous signal produced by a light sensor on a decomposition basis specific to a transformation, the sensor having a matrix of pixels disposed opposite a scene, the device comprising:

/a/ an interface (403) adapted to obtain a decomposition (301) of said asynchronous signal for a given first instant by said transformation;

/b/ an interface (403) adapted to receive from the light sensor the asynchronous signal comprising at least one event (302) coming from a pixel of the matrix, the at least one event having been produced by the sensor between the first instant and a second later instant;

/c/ a circuit (404) adapted to determine (303) a first value of said pixel ($\hat{x}$(l,c)) for the given first instant;

/d/ a circuit (404) adapted to determine a second value of said pixel ($\hat{x}$(l,c)) for the second instant as a function of the at least one event;

/e/ a circuit (404) adapted to determine an update of the decomposition (308) obtained as a function of said obtained decomposition, of a difference between the first value and of the second value and of a term dependent on coordinates of said pixel (l,c) and the decomposition basis of said transformation.

FIG. 1

FIG. 2

**FIG. 3**

FIG. 4

## RÉFÉRENCES CITÉES DANS LA DESCRIPTION

**Documents brevets cités dans la description**

- US 5272535 A

**Littérature non-brevet citée dans la description**

- **T. DELBRÜCK et al.** Activity-Driven, Event-Based Vision Sensors. *Proceedings of 2010 IEEE International Symposium on Circuits and Systems (ISCAS),* 2426-2429

- **POSCH C et al.** *A Microbolometer Asynchronous Dynamic Vision Sensor for LWIR*